# EUROPÄISCHE PATENTSCHRIFT

(11) **EP 3 186 265 B1**
(45) Veröffentlichungstag und Bekanntmachung des Hinweises auf die Patenterteilung: **10.10.2018**
(21) Anmeldenummer: 15759427.6
(22) Anmeldetag: 24.08.2015
(51) Int. Cl.: C07F 15/00, C09D 183/04, C08G 77/20, C08G 77/00

(54) **PLATINKOMPLEXE UND DEREN VERWENDUNG IN DURCH HYDROSILYLIERUNGSREAKTION VERNETZBAREN MASSEN**
PLATINUM COMPLEXES AND THEIR USE IN COMPOUNDS THAT CAN BE CROSS-LINKED BY A HYDROSILYLATION REACTION
COMPLEXES DE PLATINE ET LEUR UTILISATION DANS DES MASSES RÉTICULABLES PAR RÉACTION D'HYDROSILYLATION

(30) Priorität: 26.08.2014 DE 102014217003
(43) Veröffentlichungstag der Anmeldung: 05.07.2017
(73) Patentinhaber: Wacker Chemie AG, 81737 München (DE)
(72) Erfinder: ZICHE, Wolfgang, 84489 Burghausen (DE); KÖLLNBERGER, Andreas, 84375 Kirchdorf (DE)
(74) Vertreter: Budczinski, Angelika
(86) Internationale Anmeldenummer: PCT/EP2015/069345
(87) Internationale Veröffentlichungsnummer: WO 2016/030325

(56) Entgegenhaltungen:
- WO-A1-2009/092762

## Beschreibung

Die vorliegende Erfindung betrifft Platinkomplexe, insbesondere durch ultraviolette und/oder sichtbare Strahlung aktivierbare Platinkatalysatoren, deren Herstellung, ihre Verwendung in vernetzbaren Zusammensetzungen sowie daraus hergestellte Vernetzungsprodukte, wie durch Bestrahlung hergestellte Siliconelastomere.

Im Allgemeinen erfolgt in additionsvernetzenden Siliconzusammensetzungen der Vernetzungsvorgang über eine Hydrosilylierungsreaktion, bei der als Katalysator üblicherweise Platin oder ein anderes Metall aus der Platingruppe eingesetzt wird. Bei der katalytisch ablaufenden Reaktion werden aliphatisch ungesättigte Gruppen mit Si-gebundenem Wasserstoff zur Reaktion gebracht, um die additionsvernetzbare Siliconzusammensetzung über den Aufbau eines Netzwerks in den elastomeren Zustand zu überführen.

Nach dem Stand der Technik erfolgt die Aktivierung der eingesetzten Katalysatoren normalerweise thermisch, d.h. die additionsvernetzbare Siliconzusammensetzung muss folglich für den Vernetzungsvorgang erwärmt werden. Dabei muss die Siliconzusammensetzung häufig auf ein Substrat aufgebracht werden, wie dies z.B. bei Beschichtungsvorgängen, bei ausgewählten Verguss-, Molding- und Co-Extrusions- oder sonstigen Formgebungsverfahren der Fall ist. Der eigentliche Vulkanisationsvorgang erfolgt in diesem Fall durch einen Erwärmungsprozess, für den oftmals kosten- und energieintensive Anlagen betrieben werden müssen.

Mit der Verwendung von Mischungen, die durch ultraviolette und/oder sichtbare Strahlung vernetzt werden können, geht demgegenüber bei vielen Applikationen eine teilweise erhebliche Kosteneinsparung einher. In der Folge kann eine Energie- und Prozesskosteneinsparung und damit eine entsprechende Produktivitätssteigerung erzielt werden. Zudem ermöglicht die Vernetzung über ultraviolette und/oder sichtbare Strahlung oftmals eine kontinuierliche Fertigung, die gegenüber einem diskontinuierlichen Batch-Prozess weitere Produktivitätsvorteile mit sich bringt. Ein weiterer Vorteil ergibt sich aus der Tatsache, dass insbesondere bei Mehrkomponentenbauteilen, wie beispielsweise Hart-Weich-Verbunden, die als Verbundpartner neben einem elastomeren Material beispielsweise einen Thermoplasten enthalten, durch den Verzicht auf einen temperaturintensiven Fertigungsschritt den thermisch bedingten Verzug des Bauteils verhindern.

In der Fachliteratur wird eine Vielzahl von Platinkomplexen beschrieben, die sich dazu eignen, durch Strahlung eine Hydrosilylierungsreaktion zu initiieren. Alle beschriebenen Platinkatalysatoren können durch Licht aktiviert werden und sind auch nach Abschalten der Lichtquelle dazu befähigt, Siliconzusammensetzungen zu vernetzen. Dieser Vorgang ist dem Fachmann als Dunkelreaktion bekannt.

Dunkelstabilität beschreibt hingegen, die Stabilität einer Zusammensetzung, die photoaktivierbare Katalysatoren enthält, im Dunklen, also letztlich die technisch erwünschte Lagerstabilität einer Zusammensetzung.

EP 0 146 307 B1 offenbart (η⁵-Cyclopentadienyl)tri(σ-alkyl)Platin(IV)-Komplexe, die sich durch eine gute Löslichkeit in der Siliconmatrix auszeichnen.

EP 1 803 728 A1 offenbart modifizierte (η⁵-Cyclopentadienyl)-tri(σ-alkyl)Platin(IV)-Komplexe, die am Cyclopentadienylring spezielle Substituenten (Naphtyl, Anthracenyl, etc.) tragen, um die Quantenausbeute zu erhöhen und um die zur Aktivierung benötigte Lichtwellenlänge ins Langwellige zu verschieben. Die Anbindung von aromatischen Ringen wirkt sich jedoch nachteilig auf die Löslichkeit der Komplexe in der Siliconmatrix aus. Alle beanspruchten (η⁵-Cyclopentadienyl)tri(σ-alkyl)Platin(IV)-Komplexe tragen ausschließlich Reste am Cyclopentadienyl-Liganden, die eine Hydrosilylierungsreaktion nicht stören, d.h. insbesondere keine ungesättigten Reste.

EP 2 238 145 B1 und WO 2009/092762 A1 beschreiben die Anbindung von (η⁵-Cyclopentadienyl)tri(σ-alkyl)Platin(IV)-Komplexen an Polymere, um die Flüchtigkeit dieser Verbindungsklasse zu reduzieren. Ungesättigte Reste im Komplex sind beispielhaft nicht aufgeführt. Die theoretische Möglichkeit einer Anbindung über ungesättigte Reste wird erörtert. Die allgemein beanspruchten ungesättigten Reste am Komplex umfassen keine Silylreste.

Allen beanspruchten Zusammensetzungen, die (η⁵-Cyclopentadienyl)tri(σ-alkyl)Platin(IV)-Komplexe enthalten, ist gemein, dass eine Modifikation zur Erhöhung der Dunkelstabilität nicht beschrieben ist.

Royo beschreibt für Metallocene der frühen Übergangsmetalle allylsilylsubstituierte Cyclopentadienylreste (Chem. Commun. 1998, 17). Der Allylsilylrest eignet sich besonders zu Stabilisierung kationischer Metallzentren, die durch den Verlust σ-gebundener Alkylreste entstehen. Für späte Übergangsmetalle wie Platin werden keine Metallocene dieser Art beschrieben.

Zusammenfassend kann festgestellt werden, dass keine der bislang bekannten über sichtbare und/oder UV-Strahlung vernetzbare Siliconzusammensetzungen in befriedigender Weise den Anforderungen gerecht wird, die an derartige Siliconzusammensetzungen, die insbesondere zur Herstellung im industriellen Umfeld herangezogen werden können, gestellt werden.

Eine Aufgabe der vorliegenden Erfindung war es daher die Bereitstellung von geeigneten Platinkatalysatoren. Eine weitere Aufgabe der vorliegenden Erfindung bestand darin Siliconzusammensetzungen zur Verfügung zu stellen, welche die oben genannten Nachteile, insbesondere die unzureichende Dunkelstabilität, nicht aufweisen.

Gegenstand der Anmeldung sind Platinkomplexe der allgemeinen Formel

R³₃Pt{CpR⁴₅₋ᵣ₋ₜ[(CR₂)ₙSiR¹ₒR²ₚ]ₜ[SiR⁷ₛR⁸₃₋ₛ]ᵣ} (I),

wobei
**Cp** Cyclopentadienylrest bedeutet,
**n** eine ganze Zahl von 1 bis 8 ist,
**o** 0, 1, 2 oder 3 ist,
**p** 0, 1, 2 oder 3 ist, mit der Maßgabe, dass o+p=3 ist,
**r** 1, 2, 3, 4 oder 5, bevorzugt 1, 2 oder 3, besonders bevorzugt 1 oder 2, insbesondere 1, ist,
**t** 0, 1, 2, 3 oder 4, bevorzugt 0 oder 1, besonders bevorzugt 1, ist, mit der Maßgabe, dass **r+t≤5,** bevorzugt 3, ist,
**s** 0, 1 oder 2, bevorzugt 2, ist,
**R** gleich oder verschieden sein kann und Wasserstoffatom oder einen monovalenten, unsubstituierten oder substituierten Kohlenwasserstoffrest bedeutet,
**R¹** gleich oder verschieden sein kann und einen monovalenten, unsubstituierten oder substituierten Kohlenwasserstoffrest, der durch Heteroatome unterbrochen sein kann, bedeutet,
**R²** gleich oder verschieden sein kann und hydrolysierbare Gruppe oder einen über Sauerstoff angebundenen Siloxyrest bedeutet,
**R⁷** gleich oder verschieden sein kann und einen monovalenten, unsubstituierten oder substituierten, aliphatisch gesättigten Kohlenwasserstoffrest, der durch Heteroatome unterbrochen sein kann, oder einen über Sauerstoff angebundenen Siloxyrest bedeutet,
**R⁸** gleich oder verschieden sein kann und einen aliphatisch ungesättigten, gegebenenfalls substituierten Rest darstellt,
**R³** gleich oder verschieden sein kann und einen monovalenten, unsubstituierten oder substituierten aliphatisch gesättigten Kohlenwasserstoffrest bedeutet,
**R⁴** gleich oder verschieden sein kann, Wasserstoffatom, SiC-gebundener Silylrest oder einen unsubstituierten oder substituierten Kohlenwasserstoffrest bedeutet, der durch Heteroatome unterbrochen sein kann.

Cyclopentadienylrest Cp ist in der Literatur allgemein bekannt. Vorzugsweise soll unter Cyclopentadienylrest Cp im Rahmen der vorliegenden Erfindung das Cyclopentadienyl-Anion verstanden werden, welches aus einem einfach negativ geladenen, aromatischen Fünfringsystem C₅R'₅⁻ besteht. Cyclopentadienylplatinkomplexe im Sinne der Erfindung enthalten einen an ein platinhaltiges Fragment M η⁵-gebundenen Cyclopentadienylrest, 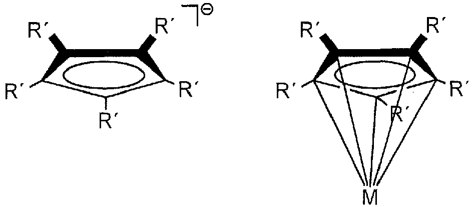 wobei R' beliebige Reste darstellt, die zur Bildung anellierter Ringe auch miteinander verbunden sein können.

Beispiele für Reste R¹ sind Alkylreste, wie der Methyl-, Ethyl-, n-Propyl-, iso-Propyl-, n-Butyl-, sec-Butyl-, iso-Butyl-, tert.-Butyl-, n-Pentyl-, sec-Pentyl, iso-Pentyl-, neoPentyl-, tert.-Pentylrest; Hexylreste, wie der n-Hexylrest; Heptylreste, wie der n-Heptylrest; Octylreste, wie der n-Octylrest und iso-Octylreste, wie der 2,4,4-Trimethylpentylrest; Nonylreste, wie der n-Nonylrest; Decylreste, wie der n-Decylrest; Dodecylreste, wie der n-Dodecylrest; Hexadecylreste, wie der n-Hexadecylrest; Octadecylreste, wie der n-Octadecylrest; Cycloalkylreste, wie der Cyclopentyl-, Cyclohexyl-, Cycloheptylrest und Methylcyclohexylrest; Alkenylreste, wie der Vinyl-, 1-Propenyl-, 2-Propenyl, n-5-Hexenyl-, 4-Vinylcyclohexyl- und der 3-Norbornenylrest; Arylreste, wie der Phenyl-, Naphthyl-, Anthryl- und Phenanthrylrest; Alkarylreste, wie der o-, m- und p-Tolyl-, Xylyl-, Mesitylenyl- und o-, m- und p-Ethylphenylrest; und Aralkylreste, wie der Benzylrest, der α- und der β-Phenylethylrest.

Beispiele für substituierte Reste R¹ sind Halogenalkylreste, wie der 3,3,3-Trifluor-n-propylrest, der 2,2,2,2',2',2'-Hexafluor- isopropylrest und der Heptafluorisopropylrest, und Halogenarylreste, wie der o-, m- und p-Chlorphenylrest.

Bevorzugt handelt es sich bei Rest R¹ um einwertige Kohlenwasserstoffreste mit 1 bis 30 Kohlenstoffatomen, die durch Heteroatome, wie O-, N-, S oder P, unterbrochen sein können, besonders bevorzugt um einwertige, aliphatische gesättigte Kohlenwasserstoffreste mit 1 bis 8 Kohlenstoffatomen, insbesondere um den Methyl- oder Phenylrest, ganz besonders bevorzugt um den Methylrest.

Beispiele für Rest R sind Wasserstoffatom und die für Rest R¹ angegebenen Beispiele.

Bevorzugt handelt es sich bei Rest R um Wasserstoffatom oder Kohlenwasserstoffreste mit 1 bis 30 Kohlenstoffatomen, besonders bevorzugt um Wasserstoffatom oder lineare gesättigte Kohlenwasserstoffreste mit 1 bis 8 Kohlenstoffatomen, insbesondere um Wasserstoffatom.

Bevorzugt handelt es sich bei den hydrolysierbaren Resten R² um Carboxyreste -O-C(O)R⁵, Oximreste -O-N=CR⁵₂, Organyloxyreste -OR⁵, Amidreste -NR⁶-C(O)R⁵, Aminreste -NR⁶₂ oder Aminoxyreste -O-NR⁶₂, wobei **R⁵** und **R⁶** unabhängig voneinander jeweils gleich oder verschieden sein können und eine für R angegebene Bedeutung haben, besonders bevorzugt um Carboxyreste oder Organyloxyreste.

Bevorzugt handelt es sich bei Rest R⁵ um Kohlenwasserstoffreste mit 1 bis 6 Kohlenstoffatomen, die durch Sauerstoffatome unterbrochen sein können, besonders bevorzugt um Kohlenwasserstoffreste mit 1 bis 3 Kohlenstoffatomen.

Bevorzugt handelt es sich bei Rest R⁶ um Kohlenwasserstoffreste mit 1 bis 6 Kohlenstoffatomen, besonders bevorzugt um Kohlenwasserstoffreste mit 1 bis 3 Kohlenstoffatomen.

Beispiele für Siloxyreste R² sind lineare oder verzweigte Oligo- und Polysiloxyreste mit 1 bis 5000 Siloxyeinheiten, die Dimethylsiloxy-, Phenylmethylsiloxy-, Diphenylsiloxy-, Methylsiloxy-, Phenylsiloxy oder SiO_{4/2}-Einheiten enthalten und Hydroxy-, Trimethylsilyl-, Dimethylsilyl- oder Vinylendgruppen tragen.

Bevorzugt handelt es sich bei R² gleich Siloxyreste um solche der Formel

-(OSiR⁹₂)ₘ-R⁹ (II),

wobei m gleich einer ganzen Zahl von 1 bis 5000, bevorzugt 8 bis 50, ist und **R⁹** gleich oder verschieden sein kann und eine für Rest R¹ angegebene Bedeutung hat.

Bevorzugt handelt es sich bei Rest R² um Alkoxy-, Carboxyl- oder Siloxyreste, besonders bevorzugt um Methoxy-, Acetoxy-, 2-Methoxyethoxy-Gruppen oder Siloxyreste - (OSiMe₂)₈₋₅₀₀-CH=CH₂ oder - (OSiMe₂)₈₋₅₀₀-CH₃ mit Me gleich Methylrest.

Beispiele für Rest R⁷ sind die für Rest R¹ angegebenen Beispiele für gegebenenfalls substituierte, aliphatisch gesättigte Kohlenwasserstoffreste sowie die für Rest R² angegebenen Beispiele für Siloxyreste.

Bevorzugt handelt es sich bei Rest R⁷ um gegebenenfalls mit Halogenatomen substituierte, einwertige, aliphatisch gesättigte Kohlenwasserstoffreste mit 1 bis 30 Kohlenstoffatomen, die durch Heteroatome, wie O-, N-, S oder P, unterbrochen sein können, besonders bevorzugt um einwertige, aliphatische gesättigte Kohlenwasserstoffreste mit 1 bis 8 Kohlenstoffatomen, insbesondere um den Methyl- oder Phenylrest, ganz besonders bevorzugt um den Methylrest.

Beispiele für Rest R⁸ sind die für Rest R¹ angegebenen Beispiele für gegebenenfalls substituierte, aliphatisch ungesättigte Kohlenwasserstoffreste.

Bevorzugt handelt es sich bei Rest R⁸ um Reste der Formel -CR¹⁰₂-CR¹⁰=CR¹⁰₂, wobei **R¹⁰** gleich oder verschieden sein kann und eine für Rest R angegebene Bedeutung hat.

Bevorzugt handelt es sich bei Rest R¹⁰ um Wasserstoffatom oder Kohlenwasserstoffreste mit 1 bis 30 Kohlenstoffatomen, besonders bevorzugt um Wasserstoffatom oder lineare gesättigte Kohlenwasserstoffreste mit 1 bis 8 Kohlenstoffatomen, insbesondere um Methylrest oder Wasserstoffatom, ganz besonders bevorzugt um Wasserstoffatom.

Beispiele für Rest R³ sind die für Rest R¹ angegebenen Beispiele für gegebenenfalls substituierte Kohlenwasserstoffreste.

Bevorzugte Reste R³ sind gegebenenfalls mit Halogenatom, Silylrest oder Arylrest substituierte aliphatische Kohlenwasserstoffreste mit 1 bis 30 Kohlenstoffatomen, die durch Heteroatome, wie O-, N-, S oder P, unterbrochen sein können, besonders bevorzugt um lineare oder verzweigte Alkylreste mit 1 bis 12 Kohlenstoffatomen, insbesondere der Methylrest.

Rest R⁴ gleich gegebenenfalls substituierter Kohlenwasserstoffrest, der durch Heteroatome unterbrochen sein kann, ist ein- oder mehrwertig, bevorzugt einwertig. Zwei oder mehrere einwertige Reste R⁴ können auch einen oder mehrere Ringe bilden, die mit dem Cyclopentadienylrest anelliert sind und aromatisch, gesättigt oder aliphatisch ungesättigt sein können. Es kann auch ein mehrwertiger Rest R⁴ über mehr als eine Stelle an den Cyclopentadienylrest gebunden sein und einen oder mehrere Ringe bilden, die mit dem Cyclopentadienylrest anelliert sind und aromatisch, gesättigt oder aliphatisch ungesättigt sein können.

Beispiele für Rest R⁴ sind die für Rest R angegebenen Beispiele für einwertige, gegebenenfalls substituierte Kohlenwasserstoffreste und SiC-gebundene Silylreste SiR⁷₃, wie beispielsweise Trialkylsilylreste. Beispiele für durch verbundene einwertige bzw. zweiwertige Reste R⁴ gebildete anellierte Ringe sind Benzo-, Naphtho-, Cyclopenta- oder Cyclohexagruppen.

Bevorzugt handelt es sich bei Rest R⁴ um Wasserstoffatom oder gegebenenfalls mit Halogenatomen substituierte, einwertige Kohlenwasserstoffreste mit 1 bis 30 Kohlenstoffatomen, die durch Heteroatome, wie O-, N-, S oder P, unterbrochen sein können, oder Benzoreste oder Trialkylsilylreste, besonders bevorzugt um Wasserstoffatom oder einwertige, aliphatisch gesättigte Kohlenwasserstoffreste mit 1 oder 8 Kohlenstoffatomen oder Benzoreste, insbesondere um Wasserstoffatom oder den Methylrest.

Beispiele für erfindungsgemäße Platinkomplexe der Formel (I) sind
- Trimethyl[(allyldimethylsilyl)cyclopentadienyl]-platin(IV),
- Trimethyl[((2-methyl-allyl)dimethylsilyl)cyclopentadienyl]-platin(IV),
- Trimethyl[(trimethoxysilyl)methyl-(allyldimethylsilyl)cyclopentadienyl]-platin(IV),
- Trimethyl[(2-trimethoxysilyl)ethyl-(allyldimethylsilyl)cyclopentadienyl]-platin(IV),
- Trimethyl[(3-trimethoxysilyl)propyl-(allyldimethylsilyl)cyclopentadienyl]-platin(IV),
- Trimethyl[(3-dimethoxymethylsilyl)propyl-(allyldimethylsilyl)cyclopentadienyl]-platin(IV),
- Trimethyl[(4-trimethoxysilyl)butyl-(allyldimethylsilyl)cyclopentadienyl]-platin(IV),
- Trimethyl[(2-trimethoxysilyl)-1-methyl-ethyl-(allyldimethylsilyl)cyclopentadienyl]-platin(IV),
- Trimethyl[(3-trimethoxysilyl)-2-methyl-2-propyl-(allyldimethylsilyl)cyclopentadienyl] -platin(IV),
- Trimethyl[bis(allyldimethylsilyl)cyclopentadienyl]-platin(IV),
- Trimethyl[bis(2-methyl-allyldimethylsilyl)cyclopentadienyl]-platin(IV),
- Trimethyl[(trimethoxysilyl)methyl-bis(allyldimethylsilyl)cyclopentadienyl] -platin(IV),
- Trimethyl[(2-trimethoxysilyl)ethyl-bis(allyldimethylsilyl)cyclopentadienyl] -platin(IV),
- Trimethyl[(3-trimethoxysilyl)propyl-bis(allyldimethylsilyl)-cyclopentadienyl]-platin(IV),
- Trimethyl[(4-trimethoxysilyl)butyl- bis(allyldimethylsilyl)-cyclopentadienyl] -platin(IV),
- Trimethyl[(2-trimethoxysilyl)-1-methyl-ethyl-bis(allyldimethylsilyl)cyclopentadienyl]-platin(IV),
- Trimethyl[(3-trimethoxysilyl)-2-methyl-2-propyl-bis(allyldimethylsilyl)cyclopentadienyl]-platin(IV),
- Trimethyl[tris(allyldimethylsilyl)cyclopentadienyl]-platin(IV),
- Trimethyl[(triethoxysilyl)methyl-(allyldimethylsilyl)cyclopentadienyl]-platin(IV),
- Trimethyl[(triacetoxysilyl)methyl-(allyldimethylsilyl)cyclopentadienyl]-platin(IV),
- Trimethyl[(3-bis-trimethylsiloxy)methylsilylpropyl](allyldimethylsilyl)cyclopentadienyl-platin(IV),
- Trimethyl[(3-triethoxysilyl)propyl-(allyldimethylsilyl)cyclopentadienyl]-platin(IV),
- Trimethyl[(triethoxysilyl)methyl-bis(allyldimethylsilyl)cyclopentadienyl]-platin(IV),
- Trimethyl[(3-triethoxysilyl)propyl-bis(allyldimethylsilyl)-cyclopentadienyl]-platin(IV),
- Trimethyl[(triethoxysilyl)methyl-tris(allyldimethylsilyl)cyclopentadienyl]-platin(IV),
- Triethyl[(allyldimethylsilyl)cyclopentadienyl]-platin(IV),
- Tris(trimethylsilylmethyl)[(allyldimethylsilyl)cyclopentadienyl]-platin(IV),
- Triethyl[(trimethoxysilyl)methyl-(allyldimethylsilyl)cyclopentadienyl] -platin(IV),
- Triethyl[(trimethoxysilyl)methyl-bis(allyldimethylsilyl)cyclopentadienyl]-platin(IV),
- Triethyl[tris(allyldimethylsilyl)cyclopentadienyl]-platin(IV) und
- Triethyl[(trimethoxysilyl)methyl-tris(allyldimethylsilyl)cyclopentadienyl]-platin(IV).

Bevorzugt handelt es sich bei den erfindungsgemäßen Platinkomplexen um
- Trimethyl[(allyldimethylsilyl)cyclopentadienyl]-platin(IV),
- Trimethyl[bis(allyldimethylsilyl)cyclopentadienyl]-platin(IV),
- Trimethyl[(3-dimethoxymethylsilyl)propyl-(allyldimethylsilyl)cyclopentadienyl]-platin(IV),
- Trimethyl[(3-trimethoxysilyl)propyl-bis(allyldimethylsilyl)-cyclopentadienyl]-platin(IV) und
- Trimethyl[(3-trimethoxysilyl)propyl-(allyldimethylsilyl)cyclopentadienyl] -platin(IV),
   besonders bevorzugt um
- Trimethyl[(allyldimethylsilyl)cyclopentadienyl]-platin(IV),
- Trimethyl[(3-dimethoxymethylsilyl)propyl-(allyldimethylsilyl)cyclopentadienyl]-platin(IV) und
- Trimethyl[(3-trimethoxysilyl)propyl-(allyldimethylsilyl)cyclopentadienyl] -platin(IV),
   insbesondere um
- Trimethyl[(allyldimethylsilyl)cyclopentadienyl]-platin(IV) und
- Trimethyl[(3-dimethoxymethylsilyl)propyl-(allyldimethylsilyl)cyclopentadienyl]-platin(IV).

Die erfindungsgemäßen Platinkomplexe der Formel (I) sind luftstabile und, in Abwesenheit hydrolysierbarer Reste, feuchtigkeitsstabile Verbindungen. Sie sind labil gegenüber Bestrahlung, so dass sie photochemisch aktiviert werden können und Hydrosilylierungsreaktionen katalysieren.

Mit hydrolysierbaren Resten R² versehene Platinkomplexe der Formel (I) können über bekannte Verfahren der Siloxanchemie, wie (Co)Hydrolyse, (Co)Kondensation oder Äquilibrierung in polymergebundene Komplexe überführt werden, so dass R² einen Siloxyrest bedeutet.

Die erfindungsgemäßen Platinkomplexe der Formel (I) haben den Vorteil, dass sie einfach herstellbar sind sowie luft- und, in Abwesenheit hydrolysierbarer Reste, feuchtigkeitsstabil sind. Sie sind mit gängigen Strahlungsquellen aktivierbar und wirken dann als Hydrosilylierungskatalysatoren. Außer Lichtausschluss sind bei der Handhabung der Komplexe und der Formulierung von Zubereitungen, die die Komplexe enthalten, bevorzugt keine zusätzlichen Maßnahmen nötig.

Die Herstellung der erfindungsgemäßen Platinkomplexe der allgemeinen Formel (I) erfolgt bevorzugt durch Umsetzung einer Platinvorstufe mit einem Silylcyclopentadienidsalz enthaltend mindestens einen aliphatisch ungesättigten Kohlenwasserstoffrest am Siliciumatom in einem aprotischen Lösungsmittel, wie beispielsweise Diethylether, Tetrahydrofuran, Furan, Essigsäureethylester und Essigsäuremethylester, bei Temperaturen von -78 bis 100°C und einem Druck der umgebenden Atmosphäre, also etwa 1013 hPa, und unter Inertgas. Gegebenenfalls werden entstandene Salze mit Wasser gelöst und die organische Phase unter vermindertem Druck entflüchtigt, die Platinkomplexe werden, falls sie von der Flüchtigkeit geeignet sind, unter vermindertem Druck und bei Temperaturen bis 100°C destilliert. Die Reinigung des Komplexes ist auch durch Kristallisation, Sublimation, Chromatographie, Extraktion oder andere übliche Methoden möglich. Die Synthese- und Reinigungsmethoden beruhen auf dem Fachmann bekannten Methoden.

Die gesamten Syntheseschritte erfolgen bevorzugt unter Ausschluss von kurzwelligem Licht mit einer Wellenlänge von kleiner 500 nm. Bedingungen dieser Art sind dem Fachmann z.B. aus der Photolithographie bekannt, bei der photo-chemisch unwirksame Beleuchtung ("Gelblicht") eingesetzt wird.

Bei der erfindungsgemäß eingesetzten Platinvorstufe handelt es sich bevorzugt um kommerziell erhältliche Trialkylplatin(IV)-halogenide, wie beispielsweise (Me₃PtI)₄-, (Me₃PtCl)₄ oder (Me₃PtCl)₄ mit Me gleich Methylrest. Vorzugsweise wird das Silylcyclopentadienid vor der Umsetzung mit der Platinvorstufe aus dem entsprechenden Silylcyclopentadien und einer starken Base wie z.B. LiH, NaH, KH, n-Butyl-Lithium oder t-Butyl-Lithium durch Deprotonierung hergestellt. Die Synthese kann nach in der Chemie gängigen Verfahren erfolgen. Hierbei sei z.B. auf Magnetic Resonance in Chemistry 1992, 30, 481 oder J. Am. Chem. Soc. 1989, 111, 8779 verwiesen.

Die erfindungsgemäßen Platinkomplexe der allgemeinen Formel (I) mit t>0 und R² gleich hydrolysierbarem Rest besitzen zusätzlich den Vorteil, dass sie, nach der entsprechenden Reinigung der Komplexe, (co)hydrolysiert und in eine Siloxanmatrix einkondensiert werden können und damit polymer gebunden vorliegen. Die erfindungsgemäße Herstellung der Komplexe der Formel (I) in hoher Reinheit durch gängige Techniken und die sich anschließende optionale Anbindung an die Siloxanmatrix vermindert sowohl den Dampfdruck als auch die Bioverfügbarkeit des Katalysators aus der Siliconmatrix sowohl in unvernetzten Siliconmischungen als auch in vernetzten.

Die (Co)Hydrolyse und (Co)Kondensation mit anderen siliciumorganischen Verbindungen, die ebenfalls hydrolysierbare oder kondensierbare Gruppen tragen, ist ein dem Fachmann bekannter Verfahrensschritt. Beispiele für geeignete siliciumorganische Verbindungen, die im erfindungsgemäßen Verfahren eingesetzt werden können, sind Alkoxysilane wie Dimethyldimethoxysilan, Methyltrimethoxysilan, Vinyltrimethoxysilane, Dodecylmethyldiethoxysilan, n-Octadecyltrimethoxysilan, Hexamethoxydisilan, 1,1,3,3-Tetraethoxy-1,3-dimethyldisiloxan, 3-Chlorpropyltriethoxysilan und Siloxane wie Vinyltris(dimethylsiloxy)silane, 1,1,3,3-Tetramethyl-1,3-diethoxydisiloxan, α,ω-Silanol-terminierte Polydimethylsiloxane [CAS 70131-67-8], α,ω-Silanol-terminierte Diphenylsiloxan-Dimethylsiloxan Copolymere [CAS 68951-93-9, 68083-14-7], α,ω-Silanol-terminierte Polydiphenylsiloxane [CAS 63148-59-4], α,ω-Silanol-terminierte Polytrifluoropropylmethylsiloxane [CAS 68607-77-2] und Silanol-Trimethylsilyl-modifizierte Q-Harze [CAS 56275-01-5].

Für die erfindungsgemäß gegebenenfalls durchgeführte Cohydrolyse können dem Fachmann bekannte Katalysatoren verwendet werden, wie z.B. Säuren, Laugen, Zn-, Al- oder Sn-Verbindungen wie beispielsweise Bis(2,4-pentandionato)zink, Aluminium-tris(2,4-pentandionat), Trifluoressigsäure oder Essigsäure.

Ein weiterer Gegenstand der vorliegenden Erfindung ist ein Verfahren zur Herstellung der erfindungsgemäßen Platinkomplexe der Formel (I), dadurch gekennzeichnet, dass Cyclopentadienidsalze mit Triorganoplatin(IV)halogeniden umgesetzt werden.

Das erfindungsgemäße Verfahren hat den Vorteil, dass mit dem Fachmann bekannten organisch-chemischen Synthesen eine Vielfalt substituierter Cyclopentadiene herstellbar ist, die dann mit bekannten Metallierungsverfahren einfach in die entsprechenden Cyclopentadienide überzuführen sind. Ein Vorteil des Verfahrens ist, dass die Umsetzung der Cyclopentadienide mit kommerziell gut erhältlichen Triorganoplatin(IV)halogeniden möglich ist und dass erst ab diesem Verfahrensschritt der Ausschluss von Licht nötig ist.

Das erfindungsgemäße Verfahren hat ferner den Vorteil, dass Platinkomplexe der Formel (I) in hoher Reinheit hergestellt werden können, aufgrund derer die Herstellung einkomponentiger, additionsvernetzbarer Mischungen möglich ist.

Die erfindungsgemäßen bzw. erfindungsgemäß hergestellten Platinkomplexe können für alle Zwecke eingesetzt werden, für die auch bisher Platinkomplexe eingesetzt worden sind.

Die erfindungsgemäßen Platinkatalysatoren sind nützlich als Katalysatoren für Hydrosilylierungsreaktionen, bei denen die Aktivierung durch ultraviolette- oder sichtbare Strahlung erfolgt.

Ein weiterer Gegenstand der Erfindung sind additionsvernetzende Massen, dadurch gekennzeichnet, dass sie Platinkomplexe der Formel (I) enthalten.

Bevorzugt handelt es sich bei den erfindungsgemäßen Massen um solche, enthaltend
(i) mindestens eine Verbindung ausgewählt aus der Gruppe enthaltend die Verbindungen (A), (B) und (C), wobei
   (A) eine organische Verbindung und/oder eine siliciumorganische Verbindung enthaltend mindestens zwei Reste mit aliphatischen Kohlenstoff-Kohlenstoff-Mehrfachbindungen,
   (B) ein siliciumorganische Verbindung enthaltend mindestens zwei Si-gebundene Wasserstoffatome, und
   (C) eine siliciumorganische Verbindung enthaltend SiC-gebundene Reste mit aliphatischen Kohlenstoff-Kohlenstoff-Mehrfachbindungen und Si-gebundene Wasserstoffatome
   bedeuten, mit der Maßgabe, dass die Massen mindestens eine Verbindung mit aliphatischen Kohlenstoff-Kohlenstoff-Mehrfachbindungen und mindestens eine Verbindung mit Si-gebundenen Wasserstoffatomen enthält, und
(ii) mindestens einen
   (D) Platinkatalysator der Formel (I).

Die in den erfindungsgemäßen Massen eingesetzten Verbindungen (A), (B) und (C) werden gemäß dem Stand der Technik so ausgewählt, dass diese in einen vernetzten Zustand überführt werden können. So kann beispielsweise Verbindung (A) mindestens zwei aliphatisch ungesättigte Reste aufweisen und (B) mindestens drei Si-gebundene Wasserstoffatome, oder Verbindung (A) kann mindestens drei aliphatisch ungesättigte Reste aufweisen und Siloxan (B) mindestens zwei Si-gebundene Wasserstoffatome, oder anstelle von Verbindung (A) und (B) kann ein Siloxan (C) eingesetzt werden, welches aliphatisch ungesättigte Reste und Si-gebundene Wasserstoffatome aufweist, so dass eine Vernetzung der Komponenten erfolgen kann. Möglich sind zudem Mischungen aus (A), (B) und (C) von aliphatisch ungesättigten Resten und Si-gebundenen Wasserstoffatomen.

Die Mengenverhältnisse der erfindungsgemäß eingesetzten Komponenten (A), (B) und (C) entspricht denen, die aus dem Stand der Technik bekannt sind. Der Platinkatalysator (D) wird in solchen Mengen verwendet, dass bezogen auf den Pt(0)-Gehalt, ebenfalls die aus dem Stand der Technik bekannten Katalysatormengen in der erfindungsgemäßen Zusammensetzung enthalten sind.

Bei der erfindungsgemäß eingesetzten Verbindung (A) kann es sich um siliciumfreie organische Verbindungen mit vorzugsweise mindestens zwei aliphatisch ungesättigten Gruppen sowie um Organosiliciumverbindungen mit vorzugsweise mindestens zwei aliphatisch ungesättigten Gruppen handeln oder auch um Mischungen daraus.

Bevorzugt enthält Komponente (A), sofern es sich um siliciumorganische Siloxan-Verbindungen handelt, keine benachbarten Siloxy-Gruppen mit einwertigen Resten mit aliphatischen Kohlenstoff-Kohlenstoff-Mehrfachbindungen R", d.h. ohne R"Si-O-SiR"-Gruppierungen.

Beispiele für siliciumfreie organische Verbindungen (A) sind, 1,3,5-Trivinylcyclohexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Methylcyclopentadien, 5-Vinyl-2-norbornen, Bicyclo[2.2.1]hepta-2,5-dien, 1,3-Diisopropenylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinyl-hexadien-(1,5 und 4,5-Dimethyl-4,5-diethyl-octadien-(1,7), N,N'-Methylen-bis-acrylsäureamid, 1,1,1-Tris(hydroxymethyl)-propan-triacrylat, 1,1,1-Tris(hydroxymethyl)propantrimethacrylat, Tripropylenglykol-diacrylat, Diallylether, Diallylcarbonat, N,N'-Diallylharnstoff, Polyethylenglykoldiacrylat und Polyethylenglykol Dimethacrylat.

Vorzugsweise enthalten die erfindungsgemäßen Siliconzusammensetzungen als Bestandteil (A) mindestens eine aliphatisch ungesättigte Organosiliciumverbindung, wobei alle bisher in additionsvernetzenden Zusammensetzungen verwendeten, aliphatisch ungesättigten Organosiliciumverbindungen eingesetzt werden können.

Ist (A) eine Organosiliciumverbindung, die SiC-gebundene Reste mit aliphatischen Kohlenstoff-Kohlenstoff-Mehrfachbindungen aufweist, so handelt es sich dabei vorzugsweise um lineare oder verzweigte Organopolysiloxane aus Einheiten der allgemeinen Formel

R¹¹ₐR¹²_{b}SiO_{(4-a-b)/2} (IV),

wobei
R¹¹ gleich oder verschieden sein kann und Hydroxylrest oder einen monovalenten, gegebenenfalls halogensubstituierten, gegebenenfalls O-, N-, S- oder P-Atome enthaltenden, aliphatisch gesättigten Kohlenwasserstoffrest mit 1 bis 20 Kohlenstoffatomen bedeutet,
R¹² gleich oder verschieden sein kann und einen monovalenten, aliphatisch ungesättigten, gegebenenfalls halogensubstituierten, gegebenenfalls O-, N-, S-, oder P-Atome enthaltenden Kohlenwasserstoffrest mit 2 bis 10 Kohlenstoffatomen darstellt,
a 0, 1, 2 oder 3 ist,
b 0, 1, 2 oder 3, bevorzugt durchschnittlich 0,0001 bis 2, ist, mit der Maßgabe, dass die Summe a+b ≤ 4, durchschnittlich 1,5<(a+b)≤3, ist und dass pro Molekül mindestens zwei aliphatisch ungesättigte Reste R¹² enthalten sind, wobei im Molekül Einheiten der Formel (IV) mit b verschieden 0 nicht miteinander verbunden sind.

Bevorzugt handelt es sich bei Rest R¹² um gegebenenfalls halogensubstituierte, gegebenenfalls O-, N-, S-, oder P-Atome enthaltende Kohlenwasserstoffreste mit 2 bis 10 Kohlenstoffatomen, die eine endständige Kohlenstoff-Kohlenstoff-Doppelbindung aufweisen.

Die erfindungsgemäß eingesetzten Organosiliciumverbindungen (A) haben bei 25°C eine Viskosität von bevorzugt 1 bis 40 000 000 mPa*s, besonders bevorzugt, 50 bis 1 000 000 mPa*s.

Die Viskositäten werden gemäß DIN EN ISO 3219: 1994 (Polymere/Harze in flüssigem, emulgiertem oder dispergiertem Zustand) und DIN 53019 (Messung von Viskositäten und Fließkurven mit Rotationsviskosimetern) an einem Rotationsrheometer mit Luftlagerung von Anton Paar MCR301 mit Platte-/Kegelsystemen bei 25°C bestimmt.

Als Organosiliciumverbindung (B) können alle hydrogenfunktionellen Organosiliciumverbindungen eingesetzt werden, die auch bisher in additionsvernetzbaren Zusammensetzungen eingesetzt worden sind.

Organosiliciumverbindungen (B), die Si-H-gebundene Wasserstoffatome enthalten, sind vorzugsweise lineare oder verzweigte Organopolysiloxane aus Einheiten der allgemeinen Formel

R¹³_{c}H_{d}SiO_{(4-c-d)/2} (V),

wobei
R¹³ gleich oder verschieden sein kann und eine für Rest R¹¹ angegebene Bedeutung hat,
c 0, 1, 2 oder 3 ist und
d 0, 1 oder 2 ist,
mit der Maßgabe, dass die Summe c+d≤4 ist und die Organosiliciumverbindung pro Molekül mindestens 2 Si-gebundene Wasserstoffatome aufweist.

Beispiel für Komponente (B) ist Me₃Si-O-[(Me₂SiO)₉₀(MeHSiO)₁₀]-SiMe₃.

Die erfindungsgemäß eingesetzten Organosiliciumverbindungen (B) haben bei 25°C eine Viskosität von bevorzugt 100 bis 40 000 000 mPa*s, besonders bevorzugt 1000 bis 500 000 mPa*s.

Vorzugsweise sind Bestandteile (A), (B) oder (C) in einer solchen Menge in den erfindungsgemäßen vernetzbaren Massen enthalten, dass das Molverhältnis von SiH-Gruppen zu aliphatisch ungesättigten Gruppen bei 0,1 bis 20, besonders bevorzugt bei 1,0 bis 5,0, liegt.

Anstelle von Komponente (A) und (B) können die erfindungsgemäßen Massen Organosiliciumverbindungen (C), die gleichzeitig aliphatische Kohlenstoff-Kohlenstoff-Mehrfachbindungen und Si-gebundene Wasserstoffatome aufweisen, enthalten. Auch können die erfindungsgemäßen Massen alle drei Komponenten (A), (B) und (C) enthalten. Falls Organosiliciumverbindungen (C) eingesetzt werden, handelt es sich vorzugsweise um solche aus Einheiten der allgemeinen Formeln

R¹¹_{g}SiO_{4-g/2} (VII),

R¹¹ₕR¹²SiO_{3-h/2} (VIII)

und

R¹¹ᵢHSiO_{3-1/2} (IX),

wobei R¹¹ und R¹² gleich oder verschieden sein können und die oben dafür angegebene Bedeutung haben,
g 0, 1, 2 oder 3 ist,
h 0, 1 oder 2 ist und
i 0, 1 oder 2 ist, mit der Maßgabe, dass je Molekül mindestens 2 Reste R¹² und mindestens 2 Si-gebundene Wasserstoffatome vorliegen.

Beispiele für Organopolysiloxane (C) sind solche aus SiO_{4/2}, R¹¹₃SiO_{1/2}-, R¹¹₂R¹²SiO_{1/2}- und R¹¹₂HSiO_{1/2}- Einheiten, sogenannte MQ-Harze, wobei diese Harze zusätzlich R¹¹SiO_{3/2}- und R¹¹₂SiO_{2/2}-Einheiten enthalten können, sowie lineare Organopolysiloxane im Wesentlichen bestehend aus R¹¹₂R¹²SiO_{1/2}-, R¹¹₂SiO_{2/2}- und R¹¹HSiO_{2/2}-Einheiten mit R¹¹ und R¹² gleich der obengenannten Bedeutung.

Die Organopolysiloxane (C) besitzen vorzugsweise eine Viskosität von 0,01 bis 500 000 mPa*s, besonders bevorzugt 0,1 bis 100 000 mPa*s, jeweils bei 25°C.

Die erfindungsgemäß eingesetzten Komponenten (A), (B) und (C) sind handelsübliche Produkte bzw. nach in der Chemie gängigen Verfahren herstellbar.

Die Menge des eingesetzten Platinkomplexes (D) richtet sich nach der gewünschten Vernetzungsgeschwindigkeit sowie ökonomischen Gesichtspunkten. Üblicherweise werden pro 100 Gew.-Teile vernetzbare Masse bevorzugt 1·10⁻⁵ bis 5·10⁻² Gewichtsteile, besonders bevorzugt 1·10⁻⁴ bis 1·10⁻² Gewichtsteile, insbesondere 5·10⁻⁴ bis 5·10⁻³ Gewichtsteile, Platinkomplexe, jeweils berechnet als Platin-Metall, eingesetzt.

Neben den oben genannten Komponenten (A), (B), (C) und (D) können in den erfindungsgemäßen Massen noch weitere Komponenten, wie z.B. Inhibitoren und Stabilisatoren (E), Füllstoffe (F), und Zusatzstoffe (G) enthalten sein.

Komponenten (E) dienen der gezielten Einstellung der Verarbeitungszeit, dem Anspringverhalten und der Vernetzungsgeschwindigkeit der erfindungsgemäßen Massen. Diese Inhibitoren und Stabilisatoren sind auf dem Gebiet der additionsvernetzenden Zusammensetzungen sehr gut bekannt. Beispiele gebräuchlicher Inhibitoren sind acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Polymethylvinylsiloxane, die im Gegensatz zu den Organosiliciumverbindungen (A) benachbarte Einheiten R¹²Si-O-SiR¹² mit R¹²= -CH=CH₂ enthalten, die inhibierend wirken, wie beispielsweise 1,3,5,7-Tetravinyltetramethyltetracyclosiloxan, Divinyltetramethydisiloxan, Tetravinyldimethyldisiloxan, Trialkylcyanurate, Alkylmaleate, wie Diallylmaleate, Dimethylmaleat und Diethylmaleat, Alkylfumarate, wie Diallylfumarat und Diethylfumarat, organische Hydroperoxide wie Cumolhydroperoxid, tert-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime.

Bevorzugt handelt es sich bei Komponente (E) um acetylenische Alkohole und Alkylmaleate.

Die Wirkung dieser Inhibitorzusätze (E) hängt von ihrer chemischen Struktur ab, so dass die Konzentration individuell bestimmt werden muss. Falls Inhibitoren (E) eingesetzt werden, handelt es sich um Mengen von vorzugsweise 0,00001 Gew.-% bis 5 Gew.-%, bevorzugt 0,00005 bis 2 Gew.-%, besonders bevorzugt 0,0001 bis 1 Gew.-%, jeweils bezogen auf das Gesamtgewicht der erfindungsgemäßen Masse. Komponente (E) wird bevorzugt zugesetzt.

Bei den in den erfindungsgemäßen Massen gegebenenfalls eingesetzten Füllstoffen (F) kann es sich um beliebige, bisher bekannte Füllstoffe handeln.

Beispiele für Füllstoffe (F) sind nicht verstärkende Füllstoffe, also Füllstoffe mit einer BET-Oberfläche von vorzugsweise bis zu 50 m²/g, wie Quarz, Diatomeenerde, Calciumsilikat, Zirkoniumsilikat, Talkum, Kaolin, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie gefällte Kreide, Ruß, wie Furnace- und Acetylenruß und Silicium-Aluminium-Mischoxide großer BET-Oberfläche; Aluminiumtrihydroxid, hohlkugelförmiger Füllstoffe, wie keramische Mikrokugel, wie z.B. solche erhältlich unter der Handelsbezeichnung Zeeospheres™ bei der Fa. 3M Deutschland GmbH in D-Neuss, elastische Kunststoffkugeln, wie etwa solche erhältlich unter der Handelsbezeichnung EXPANCEL® bei der Fa. AKZO NOBEL, Expancel in Sundsvall, Schweden, oder Glaskugeln; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Falls die erfindungsgemäßen Massen Füllstoffe (F) enthalten, handelt es sich bei diesen vorzugsweise um pyrogene und gefällte Kieselsäuren mit BET-Oberflächen von mindestens 50 m²/g.

Gegebenenfalls eingesetzte Füllstoffe (F) haben einen Feuchtigkeitsgehalt von bevorzugt unter 1 Gew.-%, besonders bevorzugt von unter 0,5 Gew.-%.

Falls die erfindungsgemäßen Massen Füllstoffe (F) enthalten, handelt es sich um Mengen von vorzugsweise 0,1 bis 70 Gew.-%, besonders bevorzugt 1 bis 50 Gew.-%, insbesondere 10 bis 30 Gew.-%, jeweils bezogen auf das Gesamtgewicht der erfindungsgemäßen Masse. Die erfindungsgemäßen Massen enthalten bevorzugt Füllstoffe (F).

Beispiele für gegebenenfalls eingesetzte Komponenten (G) sind alle weiteren Zusatzstoffe, die auch bisher zur Herstellung von additionsvernetzbaren Zusammensetzungen eingesetzt wurden, wie harzartige Polyorganosiloxane, die von den Siloxanen (A), (B) und (C) verschieden sind, Fungizide, Duftstoffe, organische rheologische Additive, Korrosionsinhibitoren, Oxidationsinhibitoren, Lichtschutzmittel, die von den Füllstoffen (F) verschieden sind, organische flammabweisend machende Mittel und Mittel zur Beeinflussung der elektrischen Eigenschaften, die von den Füllstoffen (F) verschieden sind, Dispergierhilfsmittel, Lösungsmittel, Haftvermittler, Pigmente, Farbstoffe, Weichmacher, die von den Siloxanen (A), (B) und (C) verschieden sind, organische Polymere und Hitzestabilisatoren.

Bei den Zusatzstoffen (G) handelt es sich bevorzugt um harzartige Polyorganosiloxane, Lösungsmittel, Haftvermittler, Pigmente und Farbstoffe.

Falls die erfindungsgemäßen Massen Zusatzstoffe (G) enthalten, handelt es sich um Mengen von vorzugsweise 0 bis 30 Gew.-%, besonders bevorzugt 1 bis 20 Gew.-%, insbesondere 1 bis 5 Gew.-%, jeweils bezogen auf das Gesamtgewicht der erfindungsgemäßen Masse. Die erfindungsgemäßen Massen enthalten bevorzugt Zusatzstoffe (G).

Die erfindungsgemäßen Massen enthalten außer den Komponenten (A) bis (G) vorzugsweise keine weiteren Bestandteile.

Die Komponenten (A), (B) und (C) sowie (E), (F) und (G) sind bevorzugt unterhalb von 400 nm, besonders bevorzugt von 200 bis 400 nm, transparent, so dass eine lichtinduzierte Vernetzung der Massen durch Aktivierung des Katalysators (D) erfolgen kann.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Die erfindungsgemäßen Massen können, falls erforderlich, in Flüssigkeiten gelöst, dispergiert, suspendiert oder emulgiert werden.

Die erfindungsgemäßen Massen können - insbesondere je nach Viskosität der Bestandteile sowie Füllstoffgehalt - niedrigviskos und gießbar sein, eine pastöse Konsistenz aufweisen, pulverförmig sein oder auch geschmeidige, hochviskose Massen darstellen, wie dies bekanntermaßen bei den in Fachkreisen häufig als RTV-1, RTV-2, LSR und HTV bezeichneten Zusammensetzungen der Fall sein kann. Insbesondere können die erfindungsgemäßen Massen, falls sie hochviskos sind, in Form eines Granulates zubereitet werden. Hierbei kann das einzelne Granulatteilchen alle Komponenten enthalten, oder die erfindungsgemäß eingesetzten Komponenten sind getrennt in verschiedenen Granulatteilchen eingearbeitet. Hinsichtlich der elastomeren Eigenschaften der vernetzten erfindungsgemäßen Siliconzusammensetzungen wird gleichfalls das gesamte Spektrum umfasst, beginnend bei extrem weichen Silicongelen über gummiartige Materialien bis hin zu hochvernetzten Siliconen mit glasartigem Verhalten.

Die Herstellung der erfindungsgemäßen Massen kann nach beliebiger und an sich bekannter Art und Weise erfolgen, wie etwa nach Methoden und Mischverfahren, wie sie zur Herstellung von additionsvernetzenden Zusammensetzungen üblich sind.

Ein weiterer Gegenstand der vorliegenden Erfindung ist ein Verfahren zur Herstellung der erfindungsgemäßen Massen durch Mischen der einzelnen Komponenten in beliebiger Reihenfolge.

Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 30 bis 130°C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Das erfindungsgemäße Vermischen erfolgt bevorzugt unter Ausschluss von Feuchtigkeit und Licht mit einer Wellenlänge von kleiner 500 nm.

Das erfindungsgemäße Verfahren kann kontinuierlich oder diskontinuierlich durchgeführt werden.

In einer bevorzugten Ausführungsform des erfindungsgemäßen Verfahrens wird Platinkatalysator (D) mit einer Mischung aus (A), (B), gegebenenfalls (E), (F) und (G) gleichmäßig vermischt. Der erfindungsgemäß eingesetzte Platinkatalysator (D) kann dabei als Substanz oder als Lösung - in einem geeigneten Lösungsmittel gelöst - oder als sogenannter Batch - gleichmäßig mit einer geringen Menge (A) oder (A) mit (E) vermischt - eingearbeitet werden.

Bei den erfindungsgemäßen Zusammensetzungen kann es sich sowohl um Einkomponenten-Siliconzusammensetzungen als auch Zweikomponenten-Siliconzusammensetzungen handeln. In letzterem Fall können die beiden Komponenten der erfindungsgemäßen Zusammensetzungen alle Bestandteile in beliebigen Mengenverhältnissen enthalten. Bevorzugt enthält eine Komponente den Platinkatalysator (D) und keine Si-H-haltige Komponente (B) oder (C).

Die erfindungsgemäßen durch Anlagern von Si-gebundenem Wasserstoff an aliphatische Mehrfachbindung vernetzbaren Massen können unter den gleichen Bedingungen vernetzt werden, wie die bisher bekannten durch Hydrosilylierungsreaktion vernetzbaren Zusammensetzungen.

Vorzugsweise wird die Vernetzung bei einem Druck von 30 bis 250 000 hPa, insbesondere beim Druck der umgebenden Atmosphäre, also etwa 900 bis 1100 hPa, und bei Drücken wie sie in einer Spritzgussmaschine üblich sind, also ca. 200 000 hPa durchgeführt.

Vorzugsweise wird die Vernetzung bei einer Temperatur von 0 bis 100°C, insbesondere bei 10 bis 50°C, durchgeführt.

Vorzugsweise wird die Vernetzung durch Bestrahlung, besonders durch ultraviolette Strahlung (UV) bei 230 bis 400 nm, insbesondere 250 bis 350 nm, initiiert. Abhängig von der Formulierung, dem Katalysator und der Intensität der UV-Strahlung kann die nötige Bestrahlungszeit bevorzugt weniger als 1 Minute, besonders bevorzugt weniger als 1 Sekunde, betragen. Jede Strahlungsquelle, die Strahlungsanteile unter ungefähr 400 nm hat, kann benutzt werden. Wellenlängen kleiner 230 nm sind bevorzugt nicht zu verwenden. Konventionelle Nieder-, Mittel- und Hochdruckquecksilberlampen sind geeignet. Strahlungsquellen, wie Leuchtstoffröhren und "Schwarzlichtlampen" sind ebenfalls geeignet.

Die nötige Strahlungsdichte hängt von vielen Faktoren ab und entspricht der von vernetzbaren Systemen enthaltend z.B. Cp'PtMe₃, die dem Stand der Technik entsprechen. So beträgt die nötige Strahlungsdosis für die kommerziell erhältliche Zusammensetzung SEMICOSIL® 912 / ELASTOSIL® CAT UV (10:1), im Wellenlängenbereich 250 bis 350 nm (erzeugt durch z.B. Fe-dotierten Quecksilberstrahler) 1,5 J/cm² für 2 Minuten, was einer Strahlungsdichte von 180 mW/cm² entspricht.

Ein weiterer Gegenstand der vorliegenden Erfindung sind Formkörper hergestellt durch Vernetzung der erfindungsgemäßen Massen.

Die erfindungsgemäßen Massen sowie die erfindungsgemäß daraus hergestellten Vernetzungsprodukte können für alle Zwecke eingesetzt werden, für die auch bisher zu Elastomeren vernetzbare Organopolysiloxanzusammensetzungen bzw. Elastomere verwendet wurden. Dies umfasst beispielsweise die Siliconbeschichtung bzw. Imprägnierung beliebiger Substrate, die Herstellung von Formteilen, beispielsweise im Spritzgussverfahren, Vakuumextrusionsverfahren, Extrusionsverfahren, Formgießen und Formpressen, und Abformungen, die Verwendung als Dicht-, Einbett- und Vergussmassen usw.

Die erfindungsgemäßen vernetzbaren Massen haben den Vorteil, dass sie in einem einfachen Verfahren unter Verwendung leicht zugänglicher Ausgangsstoffe und damit wirtschaftlich hergestellt werden können.

Die erfindungsgemäßen vernetzbaren Zusammensetzungen haben den weiteren Vorteil, dass sie als einkomponentige Formulierung bei 25°C und Umgebungsdruck eine gute Lagerstabilität aufweisen und erst bei Bestrahlung durch sichtbare oder ultraviolette Strahlung vernetzen. Die Vernetzungsdauer ist abhängig von der Dauer und der Intensität der Strahlung.

Die erfindungsgemäßen Massen haben ferner den Vorteil, dass diese bei zweikomponentiger Formulierung nach Vermischen der beiden Komponenten eine vernetzungsfähige Siliconmasse ergeben, deren Verarbeitbarkeit über einen langen Zeitraum hinweg bei 25°C und Umgebungsdruck bestehen bleibt, also eine extrem lange Topfzeit zeigen, und erst bei Bestrahlung vernetzen.

Bei der Herstellung der erfindungsgemäßen vernetzbaren Zusammensetzungen ist es von großem Vorteil, dass sich der Platinkatalysator (D) gut dosieren und leicht einarbeiten lässt.

Die erfindungsgemäßen Zusammensetzungen haben des Weiteren den Vorteil, dass die daraus erhaltenen vernetzten Siliconkautschuke eine ausgezeichnete Durchsichtigkeit aufweisen.

Die erfindungsgemäßen Zusammensetzungen haben ferner den Vorteil, dass die Hydrosilylierungsreaktion sich nicht mit der Reaktionsdauer verlangsamt und nicht zwangsläufig nach Ende der Bestrahlung abbricht. Es härten auch Bereiche aus, die nicht direkt belichtet wurden, was besonders bei detailgetreuen Abformungen oder beim Verguss elektronischer Bauteile von Vorteil ist. Durch Temperaturerhöhung kann die Vernetzung nicht initiiert aber beschleunigt werden.

Der Einsatz der erfindungsgemäßen Platinkomplexe der Formel (I) in vernetzbaren Massen besitzt gegenüber den bisher verwendeten Systemen den Vorteil, dass sie eine bessere Dunkelstabilität, also eine lange Lagerstabilität vernetzbarer Zubereitungen bewirken.

Im Rahmen der vorliegenden Erfindung werden von dem Begriff Organopolysiloxane sowohl polymere, oligomere als auch dimere Siloxane umfasst.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Die Viskositäten werden gemäß DIN EN ISO 3219: 1994 (Polymere/Harze in flüssigem, emulgiertem oder dispergiertem Zustand) und DIN 53019 (Messung von Viskositäten und Fließkurven mit Rotationsviskosimetern) an einem Rotationsrheometer mit Luftlagerung von Anton Paar MCR301 mit Platte-/Kegelsystemen bei 25°C bestimmt.

Es werden folgende Abkürzungen verwendet:
Me: Methylrest

### Gelierzeit

Die Bestimmung der Gelierzeit erfolgt bei 120°C mit einem GELNORM Geltimer der Fa. Bachofer mit der unvernetzten Masse in einem Reagenzglas 160 x 15,75 mm nach DIN 16 945-1. Als Gelierzeit gilt die Zeitspanne zwischen Beginn der Prüfung und dem Zeitpunkt, an dem die Reaktionsmasse vom flüssigen in den gelierten Zustand übergeht. Die Bestimmung wird unter Ausschluss von Licht mit Wellenlängen im Bereich von < 500 nm durchgeführt.

### Penetration

Die Bestimmung der Penetration erfolgt bei 25°C am Penetrometer PNR10 der Fa. Petrotest Instruments nach DIN ISO 2137 mit einem 9,38 g schweren Viertelkonus nach einer Penetrationszeit von 5 Sekunden. Die zu untersuchende Probe wurde zuvor bei 10 Sekunden bei 1000 W im UV-Cube (Fa. Hoehnle; ca. 70 mW/cm²) mittels eines Eisenstrahlers der Wellenlänge 230-400 nm belichtet und 30 Min 150°C getempert. Die Eindringtiefe wird in 1/10 mm angegeben.

### Herstellung von Cyclopentadienyl-funktionalisiertem Silan 1:

Zu 17,6 g (200 mmol) Natriumcyclopentadienid in 100 ml abolutem Tetrahydrofuran werden bei 0°C innerhalb einer Stunde 28,6 g (0,21 mmol) Allyldimethylchlorsilan getropft. Nach Abziehen des Lösungsmittels wird mit Wasser/Diethylether (1/1 v/v) extrahiert und die organische Phase fraktioniert destilliert um in 55 %iger Ausbeute 18,1 g Allyldimethylsilyl-cyclopentadien zu erhalten.

### Herstellung von Cyclopentadienyl-funktionalisiertem Silan 2:

Zu einer Suspension von 4,8 g (200 mmol) Natriumhydrid in 250 ml abolutem Tetrahydrofuran werden bei Raumtemperatur innerhalb einer Stunde 32,8 g (200 mmol) Allyldimethylsilyl-cyclopentadien getropft. Anschließend werden innerhalb von 30 Minuten 36,4 g (200 mmol) (3-Chlorpropyl)dimethoxymethylsilan getropft. Dabei erwärmt sich die Lösung. Nach Abziehen des Lösungsmittels wird im Ölpumpenvakuum fraktioniert destilliert um in 81 %iger Ausbeute 50,2 g (3-Dimethoxymethylsilyl-propyl)(allyldimethylsilyl)cyclopentadien zu erhalten.

### Herstellung von Cyclopentadienyl-funktionalisiertem Silan 3:

Zu 16,4 g (100 mmol) Allyldimethylsilyl-cyclopentadien in 250 ml abolutem Diethylether werden bei Raumtemperatur innerhalb einer Stunde 62,5 mL 1,6 mol/L Butyllithium in Diethylether (100 mmol) getropft. Anschließend werden innerhalb von 30 Minuten 13,4 g (100 mmol) Allyldimethylchlorsilan zugetropft. Dabei erwärmt sich die Lösung. Nach Abziehen des Lösungsmittels wird im Ölpumpenvakuum fraktioniert destilliert um in 60 %iger Ausbeute 15,7 g Bis(allyldimethylsilyl)cyclopentadien zu erhalten.

### Beispiel 1

### Herstellung von Platinkomplex 1

Zu einer Lösung von 4,92 g (30 mmol) Silan 1 in 50 ml absolutem Tetrahydrofuran werden 14,1 g (33 mmol) 15 %ige Butyllithiumlösung in Hexan gegeben. Dazu werden 7,34 g Trimethylplatin(IV)-iodid (20 mmol) addiert und zwei Stunden bei Raumtemperatur gerührt. Nach Abziehen des Lösungsmittels wird der Platinkomplex bei einem Druck von 10⁻⁴ hPa zur Reinigung destilliert. Man erhält in 84 %iger Ausbeute 6,8 g reines Trimethyl[(allyldimethylsilyl)-cyclopentadienyl]-platin(IV).

### Beispiel 2

### Herstellung von Platinkomplex 2

Zu einer Lösung von 9,3 g (30 mmol) Silan 2 in 50 ml absolutem Tetrahydrofuran werden 0,72 g (30 mmol) Natriumhydrid gegeben. Dazu werden 9,15 g Trimethylplatin(IV)iodid (25 mmol) addiert und zwei Stunden bei Raumtemperatur gerührt. Nach Abziehen des Lösungsmittels wird der Platinkomplex bei einem Druck von 10⁻⁴ hPa zur Reinigung destilliert. Man erhält in 80 %iger Ausbeute 11,0 g reines Trimethyl[(3-dimethoxymethylsilyl-propyl)(allyldimethylsilyl)cyclopentadienyl]-platin(IV).

### Beispiel 3

### Herstellung von Platinkomplex 3

Zu einer Lösung von 7,9 g (30 mmol) Silan 3 in 50 ml absolutem Tetrahydrofuran werden 14,1 g (33 mmol) 15 %ige Butyllithiumlösung gegeben. Dazu werden 7,34 g Trimethylplatin(IV)iodid (20 mmol) addiert und zwei Stunden bei Raumtemperatur gerührt. Nach Abziehen des Lösungsmittels wird der Platinkomplex bei einem Druck von 10⁻⁴ hPa zur Reinigung destilliert. Man erhält in 75 %iger Ausbeute 7,5 g reines Trimethyl[bis(allyldimethylsilyl)-cyclopentadienyl]-platin(IV).

### Vergleichsbeispiel 1

### Platinkomplex 4

Als Vergleichsbeispiel dient der kommerziell verfügbare Platinkomplex Trimethyl(methylcyclopentadienyl)-platin(IV), der direkt als Katalysator eingesetzt wird. Er trägt keine weiteren funktionellen Gruppen.

### Beispiel 4

### Cohydrolyse von Platinkomplex 2 aus Beispiel 2

2,5 g Platinkomplex 2, 98 g α,ω-Silanol-terminiertes Polydimethylsiloxan [CAS 70131-67-8] mit einer Viskosität von 1000 mPa*s und 0,025 g Aluminium-tris(2,4-pentandionat) werden bei 25°C gemischt und für eine Dauer von 24 Stunden bei Raumtemperatur gerührt. Es werden ca. 100 g eines siloxangebundenen Komplexes unter Abspaltung von Methanol erhalten; zur Entfernung des Methanols wird bei 25°C 30 min bei 1 mbar entflüchtigt.

### Beispiel 5

### Gelierzeit bei 120°C:

Die Gelierzeitbestimmung erfolgt mit einer Mischung aus 2 g Me₃Si-O-[(Me₂SiO)₉₀(MeHSiO)₁₀]-SiMe₃ und 18 g einer 300 ppm-Lösung von Platinkomplex 1 aus Beispiel 1 in ViMe₂Si-O-[(Me₂SiO)ₙ]-SiMe₂Vi (Viskosität 1000 mPa*s bei 25°C) bei 120°C. Die Mischung geliert nach 9 Std. 36 Min.
Gelierzeit Platinkomplex 2 aus Beispiel 2:
Gelierzeit Platinkomplex 3 aus Beispiel 3:
Die Gelierzeit mit dem Platinkomplex 4 aus Vergleichsbeispiel 1 beträgt 15 min.
Es zeigt sich, dass die Dunkelstabilität der erfindungsgemäßen Komplexe deutlich größer ist.

### Geliertest

0,042 g einer 10%igen Chloroform-Lösung des Platinkomplexes 1 aus Beispiel 1 werden in 20 g ViMe₂Si-O-[(Me₂SiO)ₙ]-SiMe₂Vi (Viskosität 1000 mPa*s bei 25°C) eingemischt. Von dieser Mischung werden 5 g mit 50 g einer durch Hydrosilylierung vernetzbaren Zubereitung, enthaltend lineare und verzweigte vinylfunktionelle Siloxane und Si-H-funktionelle Siloxane, (käuflich erhältlich unter der Bezeichnung Semicosil® 912 bei der Wacker Chemie AG, D-München) vermischt, die Pt-Konzentration beträgt 9 ppm.
Die Mischungen mit den Platinkomplexen 2, 3 und 4 werden analog hergestellt.

Die Gelierzeit der Mischung bei Verwendung des Platinkomplexes 1 aus Beispiel 1 bei 120°C betrug 8 Std 11 Min, nach 68 Tagen Lagerung bei 25°C betrug sie 9 Std 58 Min.
Gelierzeit Platinkomplex 2 aus Beispiel 2:
Gelierzeit Platinkomplex 3 aus Beispiel 3:
Im Vergleich beträgt die Gelierzeit bei der Verwendung des Platinkomplexes 4 aus Vergleichsbeispiel 1: 1 Std 30 Min.

Es zeigt sich, dass die Dunkelstabilität der Mischungen, die erfindungsgemäße Komplexe enthalten, deutlich größer ist. Zudem ist diese Stabilität auch nach längerer Lagerung noch gegeben, so dass insgesamt auch eine längere Lagerstabilität einkomponentiger Massen gegeben ist.

Nach 110 Tagen Lagerung bei 25°C ist die Mischung enthaltend den Platinkomplex 1 aus Beispiel 1 geliert.
Im Vergleich geliert die Mischung enthaltend den Platinkomplex 4 aus Vergleichsbeispiel 1 nach 15 Tagen.
Somit ist eine lange Lagerstabilität einkomponentiger Massen gegeben.

Die Penetration des Elastomers, das durch die Aushärtung der Mischung enthaltend Platinkomplex 1 aus Beispiel 4 erhalten wurde, betrug 68 1/10 mm, nach 68 Tagen Lagerung bei 25°C betrug sie immer noch 68 1/10 mm.
Penetration Platinkomplex 2 aus Beispiel 2:

Penetration Platinkomplex 3 aus Beispiel 3:

Es zeigt sich, dass Mischungen, die die erfindungsgemäßen Katalysatoren enthalten, auch nach Lagerung keine Veränderung in den Eigenschaften der daraus hergestellten Formkörper zeigen.

## Patentansprüche

1. Platinkomplexe der allgemeinen Formel
R³₃Pt{CpR⁴₅₋ᵣ₋ₜ[(CR₂)ₙSiR¹ₒR²ₚ]ₜ[SiR⁷ₛR⁸₃₋ₛ]ᵣ} (I),
wobei
**Cp** Cyclopentadienylrest bedeutet,
**n** eine ganze Zahl von 1 bis 8 ist,
**o** 0, 1, 2 oder 3 ist,
**p** 0, 1, 2 oder 3 ist, mit der Maßgabe, dass **o+p=3** ist,
**r** 1, 2, 3, 4 oder 5, bevorzugt 1, 2 oder 3, besonders bevorzugt 1 oder 2, insbesondere 1, ist,
**t** 0, 1, 2, 3 oder 4, bevorzugt 0 oder 1, besonders bevorzugt 1, ist, mit der Maßgabe, dass **r+t≤5,** bevorzugt 3, ist,
**s** 0, 1 oder 2, bevorzugt 2, ist,
**R** gleich oder verschieden sein kann und Wasserstoffatom oder einen monovalenten, unsubstituierten oder substituierten Kohlenwasserstoffrest bedeutet,
**R¹** gleich oder verschieden sein kann und einen monovalenten, unsubstituierten oder substituierten Kohlenwasserstoffrest, der durch Heteroatome unterbrochen sein kann, bedeutet,
**R²** gleich oder verschieden sein kann und hydrolysierbare Gruppe oder einen über Sauerstoff angebundenen Siloxyrest bedeutet,
**R⁷** gleich oder verschieden sein kann und einen monovalenten, unsubstituierten oder substituierten, aliphatisch gesättigten Kohlenwasserstoffrest, der durch Heteroatome unterbrochen sein kann, oder einen über Sauerstoff angebundenen Siloxyrest bedeutet,
**R⁸** gleich oder verschieden sein kann und einen aliphatisch ungesättigten, gegebenenfalls substituierten Rest darstellt,
**R³** gleich oder verschieden sein kann und einen monovalenten, unsubstituierten oder substituierten aliphatisch gesättigten Kohlenwasserstoffrest bedeutet,
**R⁴** gleich oder verschieden sein kann, Wasserstoffatom, SiCgebundener Silylrest oder einen unsubstituierten oder substituierten Kohlenwasserstoffrest bedeutet, der durch Heteroatome unterbrochen sein kann.

2. Platinkomplexe gemäß Anspruch 1, **dadurch gekennzeichnet, dass** es sich bei Rest R² um Alkoxy-, Carboxyl- oder Siloxyreste handelt.

3. Platinkomplexe gemäß Anspruch 1 oder 2, **dadurch gekennzeichnet, dass** es sich bei Rest R⁸ um Reste der Formel
-CR¹⁰₂-CR¹⁰=CR¹⁰₂
handelt, wobei **R¹⁰** gleich oder verschieden sein kann und eine für Rest R angegebene Bedeutung hat.

4. Platinkomplexe gemäß Anspruch 3, **dadurch gekennzeichnet, dass** es sich bei Rest R¹⁰ um Methylrest oder Wasserstoffatom handelt.

5. Platinkomplexe gemäß Anspruch 3 oder 4, **dadurch gekennzeichnet, dass** es sich bei Rest R⁸ um Allylreste der Formel
-CH₂-CH=CH₂
handelt.

6. Verfahren zur Herstellung der erfindungsgemäßen Platinkomplexe der Formel (I), **dadurch gekennzeichnet, dass** Cyclopentadienidsalze mit Triorganoplatin(IV)halogeniden umgesetzt werden.

7. Additionsvernetzende Massen, **dadurch gekennzeichnet, dass** sie Platinkomplexe gemäß einem oder mehreren der Ansprüche 1 bis 5 oder hergestellt nach Anspruch 6 enthalten.

8. Massen gemäß Anspruch 7, enthaltend
(i) mindestens eine Verbindung ausgewählt aus der Gruppe enthaltend die Verbindungen (A), (B) und (C), wobei
(A) eine organische Verbindung und/oder eine siliciumorganische Verbindung enthaltend mindestens zwei Reste mit aliphatischen Kohlenstoff-Kohlenstoff-Mehrfachbindungen,
(B) ein siliciumorganische Verbindung enthaltend mindestens zwei Si-gebundene Wasserstoffatome, und
(C) eine siliciumorganische Verbindung enthaltend SiC-gebundene Reste mit aliphatischen Kohlenstoff-Kohlenstoff-Mehrfachbindungen und Si-gebundene Wasserstoffatome
bedeuten, mit der Maßgabe, dass die Massen mindestens eine Verbindung mit aliphatischen Kohlenstoff-Kohlenstoff-Mehrfachbindungen und mindestens eine Verbindung mit Si-gebundenen Wasserstoffatomen enthält, und
(ii) mindestens einen
(D) Platinkatalysator der Formel (I).

9. Verfahren zur Herstellung der Massen gemäß Anspruch 7 oder 8 durch Mischen der einzelnen Komponenten in beliebiger Reihenfolge.

10. Formkörper hergestellt durch Vernetzung der Massen gemäß Anspruch 7 oder 8 oder hergestellt nach Anspruch 9.

## Claims

1. Platinum complexes of the general formula
R³₃Pt{CpR⁴₅₋ᵣ₋ₜ[(CR₂)ₙSiR¹ₒR²ₚ]ₜ[SiR⁷ₛR⁸₃₋ₛ]ᵣ} (I)
where
**Cp** is a cyclopentadienyl radical,
**n** is an integer from 1 to 8,
**o** is 0, 1, 2 or 3,
**p** is 0, 1, 2 or 3, with the proviso that **o+p=3,**
**r** is 1, 2, 3, 4 or 5, preferably 1, 2 or 3, more preferably 1 or 2, especially 1,
**t** is 0, 1, 2, 3 or 4, preferably 0 or 1, more preferably 1, with the proviso that **r+t≤5,** preferably 3,
**s** is 0, 1 or 2, preferably 2,
**R** may be the same or different and is a hydrogen atom or a monovalent unsubstituted or substituted hydrocarbyl radical,
**R¹** may be the same or different and is a monovalent unsubstituted or substituted hydrocarbyl radical which may be interrupted by heteroatoms,
**R²** may be the same or different and is a hydrolyzable group or an oxygen-bonded siloxy radical,
**R⁷** may be the same or different and is a monovalent, unsubstituted or substituted, aliphatically saturated hydrocarbyl radical which may be interrupted by heteroatoms, or an oxygen-bonded siloxy radical,
**R⁸** may be the same or different and is an aliphatically unsaturated, optionally substituted radical,
**R³** may be the same or different and is a monovalent, unsubstituted or substituted, aliphatically saturated hydrocarbyl radical,
**R⁴** may be the same or different and is a hydrogen atom, SiC-bonded silyl radical or an unsubstituted or substituted hydrocarbyl radical which may be interrupted by heteroatoms.

2. Platinum complexes according to Claim 1, **characterized in that** the R² radical comprises alkoxy, carboxyl or siloxy radicals.

3. Platinum complexes according to Claim 1 or 2, **characterized in that** the R⁸ radical comprises radicals of the formula
-CR¹⁰₂-CR¹⁰=CR¹⁰₂
where **R¹⁰** may be the same or different and is as defined for the R radical.

4. Platinum complexes according to Claim 3, **characterized in that** the R¹⁰ radical is a methyl radical or a hydrogen atom.

5. Platinum complexes according to Claim 3 or 4, **characterized in that** the R⁸ radical comprises allyl radicals of the formula
-CH₂-CH=CH₂.

6. Process for preparing the inventive platinum complexes of the formula (I), **characterized in that** cyclopentadienide salts are reacted with triorganoplatinum(IV) halides.

7. Addition-crosslinking compositions, **characterized in that** they comprise platinum complexes according to one or more of Claims 1 to 5 or prepared according to Claim 6.

8. Compositions according to Claim 7, comprising
(i) at least one compound selected from the group comprising compounds (A), (B) and (C), where
(A) is an organic compound and/or an organosilicon compound containing at least two radicals having aliphatic carbon-carbon multiple bonds,
(B) is an organosilicon compound containing at least two Si-bonded hydrogen atoms, and
(C) is an organosilicon compound containing SiC-bonded radicals with aliphatic carbon-carbon multiple bonds and Si-bonded hydrogen atoms,
with the proviso that the compositions comprise at least one compound having aliphatic carbon-carbon multiple bonds and at least one compound having Si-bonded hydrogen atoms, and
(ii) at least one
(D) platinum catalyst of the formula (I).

9. Process for producing the compositions according to Claim 7 or 8 by mixing the individual components in any sequence.

10. Shaped body produced by crosslinking the compositions according to Claim 7 or 8 or produced according to Claim 9.

## Revendications

1. Complexes de platine de formule générale
R³₃Pt(CpR⁴₅₋ᵣ₋ₜ[(CR₂)ₙSiR¹ₒR²ₚ]ₜ[SiR⁷ₛR⁸₃₋ₛ]ᵣ} (I),
dans laquelle
Cp signifie un radical cyclopentadiényle,
n vaut un nombre entier de 1 à 8,
o vaut 0, 1, 2 ou 3,
p vaut 0, 1, 2, 3, à condition que o+p = 3,
r vaut 1, 2, 3, 4 ou 5, de préférence 1, 2 ou 3, de manière particulièrement préférée 1 ou 2, en particulier 1,
t vaut 0, 1, 2, 3 ou 4, de préférence 0 ou 1, de manière particulièrement préférée 1, à condition que r+t ≤ 5, de préférence 3,
s vaut 0, 1 ou 2, de préférence 2,
R peut être identique ou différent et signifie un atome d'hydrogène ou un radical hydrocarboné monovalent, non substitué ou substitué,
R¹ peut être identique ou différent et signifie un radical hydrocarboné monovalent, non substitué ou substitué, qui peut être interrompu par des hétéroatomes,
R² peut être identique ou différent et signifie un groupe hydrolysable ou un radical siloxy lié via oxygène,
R⁷ peut être identique ou différent et signifie un radical hydrocarboné monovalent, non substitué ou substitué, aliphatiquement saturé, qui peut être interrompu par des hétéroatomes, ou un radical siloxy lié via oxygène,
R⁸ peut être identique ou différent et représente un radical aliphatiquement insaturé, le cas échéant substitué,
R³ peut être identique ou différent et signifie un radical hydrocarboné monovalent, non substitué ou substitué, aliphatiquement saturé,
R⁴ peut être identique ou différent et signifie un atome d'hydrogène, un radical silyle lié par SiC ou un radical hydrocarboné non substitué ou substitué, qui peut être interrompu par des hétéroatomes.

2. Complexes de platine selon la revendication 1, **caractérisés en ce qu'**il s'agit, pour le radical R², de radicaux alcoxy, carboxyle ou siloxy.

3. Complexes de platine selon la revendication 1 ou 2, **caractérisés en ce qu'**il s'agit, pour le radical R⁸, de radicaux de formule -CR¹⁰₂-CR¹⁰=CR¹⁰₂, R¹⁰ pouvant être identique ou différent et présentant une signification indiquée pour le radical R.

4. Complexes de platine selon la revendication 3, **caractérisés en ce qu'**il s'agit, pour le radical R¹⁰, d'un radical méthyle ou d'un atome d'hydrogène.

5. Complexes de platine selon la revendication 3 ou 4, **caractérisés en ce qu'**il s'agit, pour le radical R⁸, de radicaux allyle de formule -CH₂-CH=CH₂.

6. Procédé pour la préparation des complexes de platine selon l'invention de formule (I), **caractérisé en ce que** des sels de cyclopentadiénure sont transformés avec des halogénures de triorganoplatine (IV).

7. Masses réticulant par addition, **caractérisées en ce qu'**elles contiennent des complexes du platine selon l'une ou plusieurs des revendications 1 à 5 ou préparés selon la revendication 6.

8. Masses selon la revendication 7, contenant
(i) au moins un composé, choisi dans le groupe contenant les composés (A), (B) ou (C),
(A) signifiant un composé organique et/ou un composé organosilicié, contenant au moins deux radicaux présentant des liaisons carbone-carbone aliphatiques multiples,
(B) signifiant un composé organosilicié, contenant au moins deux atomes d'hydrogène liés par Si et
(C) signifiant un composé organosilicié, contenant des radicaux liés par SiC, présentant des liaisons carbone-carbone aliphatiques multiples et des atomes d'hydrogène liés par Si,
à condition que les masses contiennent au moins un composé présentant des liaisons carbone-carbone aliphatiques multiples et au moins un composé présentant des atomes d'hydrogène liés par Si et
(ii) au moins un
(D) catalyseur à base de platine de formule (I).

9. Procédé pour la préparation des masses selon la revendication 7 ou 8 par mélange des différents composants dans un ordre quelconque.

10. Corps façonnés, préparés par réticulation des masses selon la revendication 7 ou 8 ou préparées selon la revendication 9.
